# EUROPÄISCHE PATENTSCHRIFT

(11) **EP 1 956 033 B1**
(45) Veröffentlichungstag und Bekanntmachung des Hinweises auf die Patenterteilung: **06.05.2009**
(21) Anmeldenummer: 08450011.5
(22) Anmeldetag: 05.02.2008
(51) Int. Cl.: C08F 22/40, C08F 2/48, C08F 2/50

(54) **Acrylimide mit Initiatoreigenschaften**
Acrylimides with initiator characteristics
Acrylimide doté de propriétés d'initiation

(30) Priorität: 06.02.2007 AT 1912007
(43) Veröffentlichungstag der Anmeldung: 13.08.2008
(73) Patentinhaber: Mondi Release Liner Austria GmbH, 3331 Hilm (AT)
(72) Erfinder: Liska, Robert, Dr. Dipl.-Ing. Ao Univ. Prof., 1200 Wien (AT); Kopeinig, Stefan, Dipl.-Ing., 6850 Dornbirn (AT); Gruber, Heinrich, Dr. Dipl.-Ing. Univ. Prof., 1190 Wien (AT); Knaus, Simone, Dr. Dipl.-Ing. Ao Univ. Prof., 1100 Wien (AT); Hummer, Erwin, Dr. Dipl.-Ing., 3363 Hausmening (AT)
(74) Vertreter: Ellmeyer, Wolfgang

(56) Entgegenhaltungen:
- WO-A-98/07759
- DECKER C. ET AL: 'Mechanistic Study of the light-induced copolymerisation of maleimide/vinyl ether systems' MACROMOL. CHEM. PHYS. Bd. 201, Nr. 13, 2000, WEINHEIM, Seiten 1493 - 1503

## Beschreibung

Die Erfindung betrifft die Verwendung von (Meth)acrylsäureimiden als Initiatoren bzw. selbstinitiierende Monomere für die Photopolymerisation.

### STAND DER TECHNIK

Die als Triacrylamid oder Trisacrylamid oder gelegentlich auch als entsprechendes -imid bezeichnete Verbindung der nachstehenden Formel wird in der Literatur als Verbindung erwähnt, die ähnlich wie organische Persulfate oder Azo-Verbindungen als Initiator und Vernetzer für die anionische Polymerisation von beispielsweise Acrylamid eingesetzt wird; siehe z.B. CN-A-1.168.894.

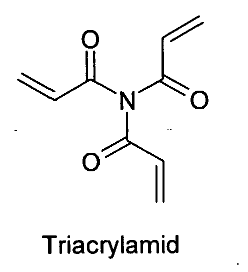

Ein Hinweis auf Initiatoreigenschaften bei Photopolymerisation findet sich darin jedoch nicht. Ebenso unbekannt sind solche Eigenschaften für Tri(s)methacrylamid bzw. -imid sowie für Diacryl- oder Dimethacrylamide oder -imide.

In der Polymerchemie wird ganz allgemein danach getrachtet, möglichst reaktive Verbindungen als Monomere bzw. Vernetzer, d.h. mehrfach funktionelle Monomere, und speziell als Polymerisationsinitiatoren zur Verfügung zu haben. Neue Polymerisationssysteme, die keinen Zusatz von Initiator erfordern, wären besonders wünschenswert. Ein Ziel der Erfindung bestand daher darin, neue, hochreaktive Monomere zu entwickeln, die Initiatoreigenschaften aufweisen.

Maleinimidverbindungen sind schon als Photoinitiatoren und selbstinitiierende Monomere bekannt, siehe z.B. WO98/07759. Es liegt jedoch in der Literatur keine Hinweise auf derartige Eigenschaften von Di(meth)-acrylamiden fanden vor. Deshalb zielten Vorversuche der Erfinder auf Triacylamide ab, in denen zwei der Acylgruppen (Meth)acrylgruppen waren. Di(meth)acrylierte Carbonsäureamide verschiedener Carbonsäuren erwiesen sich jedoch als mäßig reaktive Monomere ohne Initiatoreigenschaften, wie z.B. das nachstehende Diacrylpropionamid, welches das einfach gesättigte Analog zu Triacrylamid darstellt.

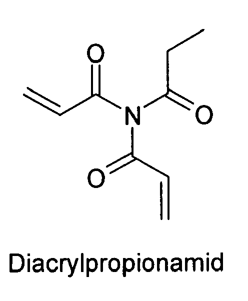

Umso überraschendererweise haben die Erfinder herausgefunden, dass nicht mit einem dritten Acylrest substituierte, sondern vielmehr C-substituierte Di(meth)acrylamide bei Einsatz in der Photopolymerisation Initiatoreigenschaften aufweisen, d.h. bei Einwirkung von Strahlung als radikalische Polymerisationsinitiatoren wirken. Diese Verbindungen werden in der gesamten Beschreibung und in den Ansprüchen als (Meth)acrylsäureimide oder kurz (Meth)acrylimide bezeichnet, was in fachbekannter Weise sowohl Acrylsäure- als auch Methacrylsäurederivate miteinschließt. Die Ausdrücke Di-, Bis-, Tri- und Trisacrylamid bezeichnen hierin hingegen Verbindungen mit zwei bzw. drei Acrylamido-Gruppen ohne zweifach acryliertes Stickstoffatom, z.B. als Vorstufen für die (Meth)acrylimide der Erfindung.

### OFFENBARUNG DER ERFINDUNG

Die Erfindung besteht somit in der Verwendung von (Meth)acrylsäureimiden der folgenden Formel (1): 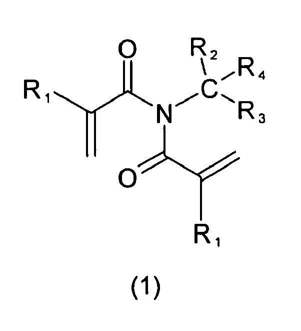 worin die
R₁ jeweils unabhängig voneinander ein Wasserstoffatom oder Methyl sind,
R₂ und R₃ jeweils unabhängig voneinander ein Wasserstoffatom oder ein gegebenenfalls substituierter unverzweigter oder verzweigter Alkylrest mit 1 bis 4 Kohlenstoffatomen sind und
R₄ ein unverzweigter, verzweigter oder zyklischer, gesättigter oder ungesättigter Kohlenwasserstoffrest mit 1 bis 10 Kohlenstoffatomen ist, der gegebenenfalls substituiert und/oder durch Heteroatome unterbrochen ist, wobei R₄ gegebenenfalls mit einem gleichen oder unterschiedlichen Rest R₄ eines zweiten (Meth)acrylsäure-imids der Formel (1) zu einem zweiwertigen Rest R₅ verbunden ist, um ein Dimer der Formel (2) zu bilden: 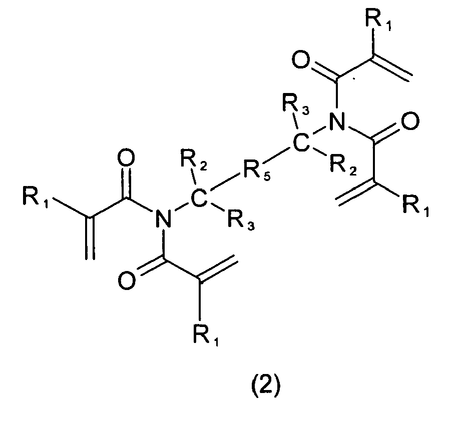
als Initiatoren bzw. selbstinitüerende Monomere für die Photopolymerisation.

Auf diese Weise können Initiatoren für photopolymerisierbare Zusammensetzungen bereitgestellt werden, die ohne Zusatz eines (weiteren) Initiators unter Einwirkung von Strahlung zu Polymeren gehärtet werden können. Durch die zumindest zwei (Meth)acrylgruppen pro Molekül können die Imide der Erfindung gleichzeitig als Vernetzer fungieren, was eine rasche Aushärtung zu stabilen Polymeren ermöglicht. Bei Verwendung von Dimeren der Formel (2) wird der Vernetzungseffekt weiter verstärkt.

Mit Strahlung ist hierin vor allem UV-Strahlung gemeint, wie auch die beiliegenden Ausführungsbeispiele belegen. Allerdings ist fachbekannt, dass sich durch geeignete Substitution von radikalischen UV-Initiatoren Verbindungen herstellen lassen, die im Bereich des sichtbaren Lichts absorbieren, so dass im weiteren Sinne unter dem Hinweis auf "Strahlung" der Bereich "UV/VIS" zu verstehen ist.

Die Reste R₁ sind dabei vorzugsweise allesamt Wasserstoffatome, da die Reaktivität und Initiatoreigenschaften von Acrylimiden signifikant besser als jene von Methacrylimiden sind.

Die optionalen Substituenten für R₂, R₃ und R₄ sind vorzugsweise aus Hydroxy und Amino ausgewählt, die mit C₁₋₄-Alkyl oder (Meth)acryl, vorzugsweise (Meth)acryl, substituiert sein können und dies bevorzugt auch sind, um zusätzliche polymerisierbare Funktionalitäten einzuführen und vor allem die Gegenwart azider Wasserstoffatome zu vermeiden, worauf nachstehend noch näher eingegangen wird. Andere Substituenten wie etwa Halogen oder Cyano kommen zwar prinzipiell ebenfalls in Frage, tragen jedoch zur Reaktivität der Verbindungen nicht wesentlich bei.

Vorzugsweise sind R₂ und R₃ weiters jeweils ein Wasserstoffatom, d.h., das an den Imid-Stickstoff gebundene Kohlenstoffatom ist eine Methylengruppe, was die Zugänglichkeit der (Meth)acrylimid-Gruppierung während der Polymerisation verbessert und so die Polymerisationsrate und mitunter auch den Doppelbindungsumsatz, erhöht.

Der daran gebundene Rest R₄ ist in bevorzugten Ausführungsformen entweder ein unverzweigter oder verzweigter Alkylrest mit 1 bis 5 Kohlenstoffatomen oder ist aus -(CH₂)ₘ-O-(CH₂)ₙ-CH₃, -(CH₂)ₘ-NR₆-(CH₂)ₙ-CH₃ und -(CH₂)ₘ-Si(CH₃)₂-(CH₂)ₙ-CH₃ ausgewählt, worin n und m ganze Zahlen von 0 bis 4, vorzugsweise 1 bis 2, sind und R₆ ein Wasserstoffatom, C₁₋₄-Alkyl oder (Meth)acryl ist. Der Substituent am lmid-Stickstoff ist somit vorzugsweise eine gegebenenfalls durch O-, N- oder Si-Atome unterbrochene Alkylgruppe, d.h. im Wesentlichen ein linearer Substituent, was etwaige sterische Hinderungen während der Polymerisation weiter ausschließt.

Dies kommt speziell zum Tragen, wenn zwei Reste R₄ zu einem zweiwertigen Rest, vorzugsweise zu einem aus folgenden Resten ausgewählten Rest R₅ verbunden sind: -(CH₂)ₚ-, -(CH₂)ₘ-O-(CH₂)_{q}-O-(CH₂)ₘ-, -(CH₂)ₘ-NR₆-(CH₂)_{q}-NR₆-(CH₂)ₘ-, -(CH₂)ₘ-Si(CH₃)₂-(CH₂)_{q}-Si(CH₃)₂-(CH₂)ₘ-, worin p und q ganze Zahlen von 2 bis 10 sind und m und R₆ wie zuvor definiert sind.

In derartigen Verbindungen der Formel (2) sind vier reaktive (Meth)acryl-Gruppen enthalten, die wie oben erwähnt für eine rasche Härtung und Vernetzung sorgen. Die Reste R₅ sind darin bevorzugt im Wesentlichen lineare Spacer zwischen den beiden Imid-Einheiten. Durch geeignete Wahl der Kettenlänge dieser Spacer lassen sich die Eigenschaften der bei der Photopolymerisation erhaltenen Polymere, wie z.B. Flexibilität, Härte usw., in einem gewissen Ausmaß steuern, was auch davon abhängig ist, ob die (Meth)acrylimide ohne weiteren Initiator homopolymerisiert oder ihrerseits als Initiatoren zu anderen Monomeren zugesetzt werden. Für die meisten Anwendungen sind p und q vorzugsweise jeweils 2 bis 4, so dass Spacer mit einer Kettenlänge von 6 bis 8 Atomen erhalten werden.

Durch den Einbau von Heteroatomen wie O, N oder Si in den Substituenten, aber auch durch die zuvor erwähnte Substitution mit Hydroxy- oder Aminogruppen sowie durch geeignete Wahl der Spacerlänge kann jedoch auch die Polarität des Spacers gesteuert werden, was speziell bei Verwendung der (Meth)acrylimide als Initiatoren für andere Monomere für verbesserte Verträglichkeit sorgen kann.

Vorzugsweise ist jeder Rest R₆ C₁₋₄-Alkyl oder (Meth)acryl, d.h., jedes Stickstoffatom kann mit einer weiteren polymerisierbaren Gruppe substituiert sein, was die Reaktivität und die Vernetzbarkeit erhöht. Zudem kann, wie Vorversuche der Erfinder zeigten, die Anwesenheit von Gruppen mit aziden Wasserstoffatomen die Initiatoreigenschaften der Verbindungen beeinträchtigen. Ohne sich auf eine spezielle Theorie festlegen zu wollen, wird angenommen, dass die Ausbildung von Wasserstoffbrücken NH-hältiger oder auch OH-hältiger Reste mit dem C=O der (Meth)acrylimide die Radikalbildung aus den Imid-Gruppierungen behindern kann, weswegen Verbindungen mit aziden Wasserstoffatomen nicht bevorzugt sind.

In speziellen Ausführungsformen der Erfindung kann auch ein Polymer oder Präpolymer mit einem oder mehreren, über einen der Reste R₂ bis R₆ gebundenen (Meth)-acrylsäureimiden der Formel (1) oder (2) modifiziert werden, um ein polymerisierbares bzw. vernetzbares Polymer oder Präpolymer mit Initiatoreigenschaften zu erhalten, das nachfolgend als Initiator für die Photopolymerisation dienen kann. Auf diese Weise kann die vorliegende Erfindung an spezielle Anforderungen, wie z.B. komplexe Gegenstände oder Beschichtungen aus Block- oder Segment-Copolymeren, angepasst werden. Ist das so modifizierte Polymer beispielsweise ein Polysiloxan, können etwa Antihaftbeschichtungen mit initiatorfreien Systemen erzeugt werden.

Wie bereits erwähnt erfolgt die Photopolymerisation gemäß vorliegender Erfindung entweder dadurch, dass ein oder mehrere (Meth)acrylsäureimide der Formel (1) oder (2) als selbstinitüerende Monomere oder ein oder mehrere damit modifizierte Polymere oder Präpolymere ohne Zusatz eines weiteren Polymerisationsinitiators unter Einwirkung von Strahlung photopolymerisiert wird/werden. Oder aber, es werden ein oder mehrere (Meth)acrylsäureimide der Formel (1) oder (2) oder oder ein oder mehrere damit modifizierte Polymere oder Präpolymere als Initiator(en) zu einem oder mehreren Monomer(en), Polymer(en) oder Präpolymer(en) ohne Initiatorwirkung zugesetzt, wonach wiederum unter Einwirkung von Strahlung Photopolymerisation durchgeführt wird. Somit können gemäß vorliegender Erfindung sowohl Homo- als auch Copolymere hergestellt werden.

Werden die (Meth)acrylsäureimide der Formel (1) oder (2) oder die damit modifizierten Polymere oder Präpolymere als Initiatoren für andere polymerisierbare Monomere, Polymere oder Präpolymere, die in der Folge kollektiv als "andere Monomere" bezeichnet werden, eingesetzt, so werden sie vorzugsweise in einer solchen Menge zugesetzt, dass die Menge einer oder mehrerer Verbindungen mit Initiatorwirkung 0,5 bis 20 Gew.-%, vorzugsweise 1 bis 10 Gew.-%, noch bevorzugter 1 bis 5 Gew.-%, bezogen auf die Gesamtmenge der anderen Monomere, beträgt.

Die genaue Menge hängt dabei, für den Fachmann selbstverständlich, vom jeweiligen System ab. Normalerweise wird freilich danach getrachtet, die Menge an - üblicherweise teurem - Initiator möglichst niedrig zu halten. Dies ist auch gemäß vorliegender Erfindung möglich, wie die nachfolgenden Ausführungsbeispiele belegen, welche die Erfindung detaillierter beschreiben, dabei jedoch lediglich zur Illustration und nicht als Einschränkung derselben dienen sollen.

In den nachfolgenden Beispielen waren sämtliche Reagenzien im Handel als synthesereine Produkte erhältlich und wurden ohne weitere Reinigung eingesetzt, sofern nichts Anderslautendes angegeben ist. Die NMR-Spektren wurden auf einem Bruker AC-E-200 FT-NMR-Spekrometer bei 200 MHz aufgenommen. Chromatographische Reinigung erfolgte mit den jeweils angegebenen Eluenten auf Kieselgelsäulen. Alle Dünnschichtchromatogramme wurden auf Aluminiumoxidplatten aufgenommen.

In den folgenden Synthesebeispielen und Beispielen wurden jeweils Derivate handelsüblicher Amine hergestellt und gestestet. Dem Fachmann ist klar, dass unter Verwendung von Aminen mit anderen Substitutionsmustern, wie z.B. Halogensubstituenten oder ungesättigten Gruppen, ähnlich reaktive Verbindungen hergestellt werden können, die dann problemlos - beispielsweise durch nukleophile Substitution, Addition oder dergleichen - an Oligomere, Polymere oder Präpolymere gebunden werden können, ohne ihre Initiatorfähigkeiten einzubüßen. Letztere sind von der Art der Substituenten R₂ bis R₅ weitestgehend unabhängig, vor allem in Fällen, wo weitere funktionelle Gruppen in γ- oder δ-Stellung zur (Meth)acrylimidogruppe oder noch weiter davon entfernt liegen.

### BEISPIELE

### Synthesebeispiele 1 bis 4

### Synthese der Acrylamide handelsüblicher, "monofunktioneller" Amine

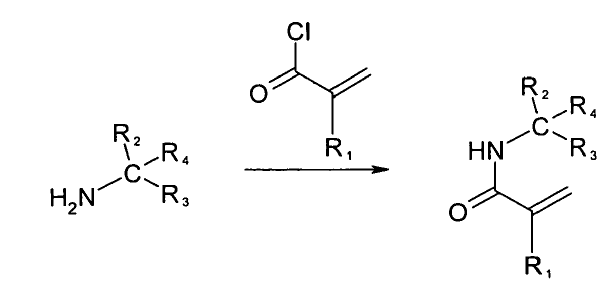

Dabei ist unter Monofunktionalität zu verstehen, dass pro Molekül nur eine - in der Folge in ein Acrylimid überführbare - primäre Aminogruppe vorhanden ist, d.h. sekundäre oder tertiäre Aminogruppen werden in diesem Fall nicht mitgezählt. Als Modellreaktion diente die nachstehende Acrylierung von Propylamin.

### Synthesebeispiel 1

### Herstellung von N-Propylacrylamid [1]

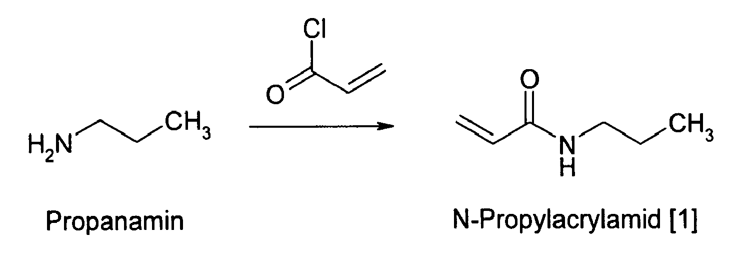

10,0 ml (122 mmol, 1,2 Äquiv.) n-Propylamin, 50 ml Wasser und 1,2 Äquivalente Säurefänger (NaHCO₃ oder Triethylamin (NEt₃)) wurden in 100 ml Ethylacetat unter Stickstoffatmosphäre mittels Eisbad gekühlt. 8,3 ml (102 mmol, 1 Äquiv.) Acrylsäurechlorid in 20 ml Ethylacetat wurden innerhalb 1 h zugetropft und das Reaktionsgemisch weitere 11 h lang bei Raumtemperatur gerührt. Nach der Phasentrennung wurde die wässrige Phase mit Ethylacetat extrahiert (2 x 50 ml). Die vereinigten organischen Phasen wurden über Na₂SO₄ getrocknet, und das Lösungsmittel sowie nichtumgesetztes Propanamin wurden im Vakuum bei Raumtemperatur abgezogen. Ausbeute: 10,6 g (92 % d. Th.) [1] als farblose, klare Flüssigkeit.
DC (EE): R_{f} = 0,60
¹H-NMR (CDCl₃, δ, ppm): 6,35-5,95 (m, 3H, COCH, cis-CH=CH₂, NH), 5,62-5,52 (dd, 1H, trans-CH=CH₂), 3,32-3,17 (m, 2H, N-CH₂), 1,61-1,40 (m, 2H, N-CH₂-CH₂), 0,89 (t, 3H, CH₃).
¹³C-NMR (CDCl₃, δ, ppm): 165,81 (C=O), 131,04, 125,12 (C=C), 40,97 (N-CH₂), 22,31 (N-CH₂-CH₂), 11,05 (CH₃).

### Synthesebeispiele 2 bis 4

### Herstellung der Acrylamide [2] bis [4] weiterer "monofunktioneller" Amine

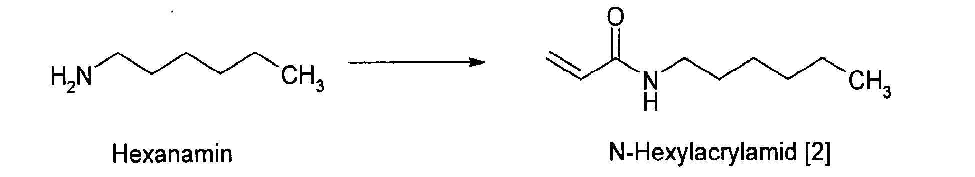

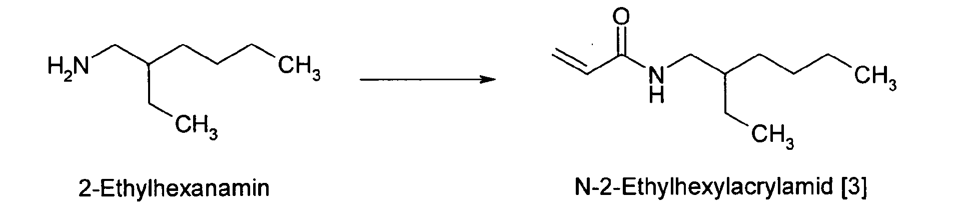

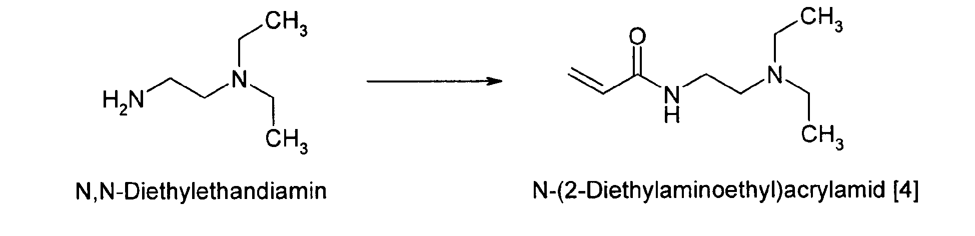

Analog zu Synthesebeispiel 1, jedoch unter zusätzlicher Ansäuerung des Reaktionsgemischs mit 0,5 N HCl vor der Phasentrennung, um überschüssiges Amin als Hydrochlorid in der wässrigen Phase zu halten, wurden N-Hexylacrylamid [2], N-2-Ethyl-hexylacrylamid [3] und N-(2-Diethylaminoethyl)acrylamid [4] durch jeweilige Reaktion von 1-Hexanamin, 2-Ethylhexanamin und N,N-Diethylethandiamin (2-Diethylaminoethanamin) mit Acrylsäurechlorid in Ausbeuten von zumindest 85 % d. Th. als farblose, klare Flüssigkeiten erhalten und anhand ihrer NMR-Spektren charakterisiert.

### Synthesebeispiele 5 bis 10

### Herstellung der Bisacrylamide handelsüblicher Diamine

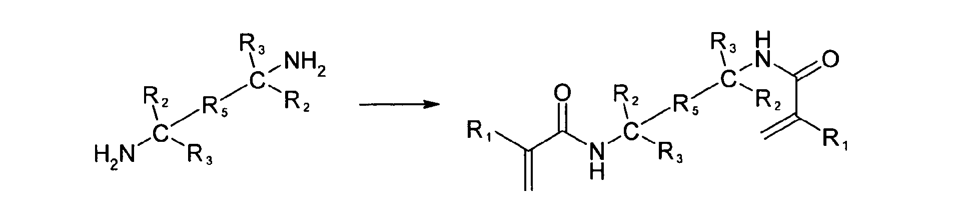

Zur leichteren Unterscheidbarkeit der hier erhaltenen difunktionellen Acrylamide von den daraus in der Folge hergestellten Acrylimiden werden Erstere durchwegs nicht als Di-, sondern als Bisacrylamide bezeichnet. Analoges gilt in weiterer Folge für die Bisacrylimide.

### Synthesebeispiel 5

### Herstellung von N,N'-(1,6-Hexylen)bisacrylamid [5]

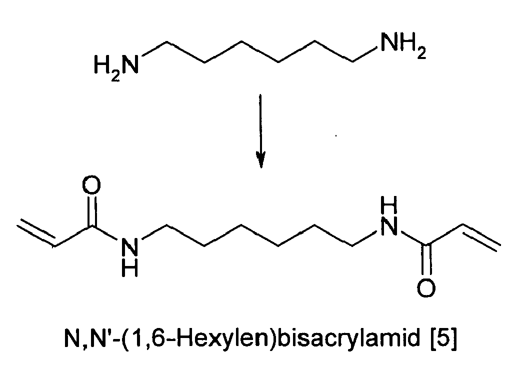

Im Wesentlichen wie in den Synthesebeispielen 2 bis 4, jedoch unter Einsatz von jeweils 2,4 mol Acrylsäurechlorid und Säurefänger (NaHCO₃ oder NEt₃) pro Mol 1,6-Hexandiamin wurde N,N'-(1,6-Hexylen)bisacrylamid [5] als farblose, klare Flüssigkeit in einer Ausbeute von 89 % d. Th. erhalten und anhand der NMR-Spektren charakterisiert.

### Synthesebeispiele 6 bis 10

### Herstellung der Acrylamide [6] bis [10] weiterer Diamine

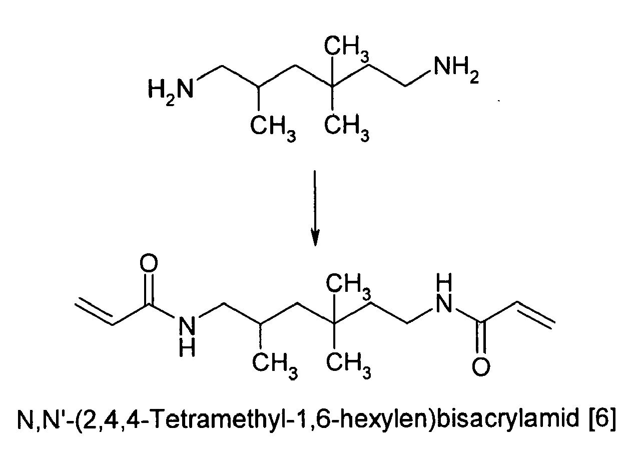

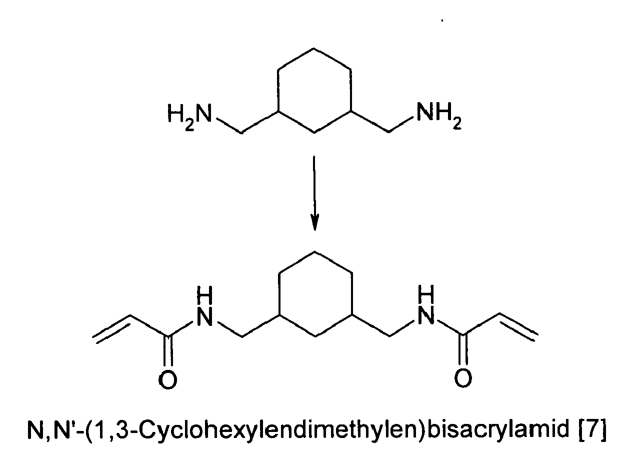

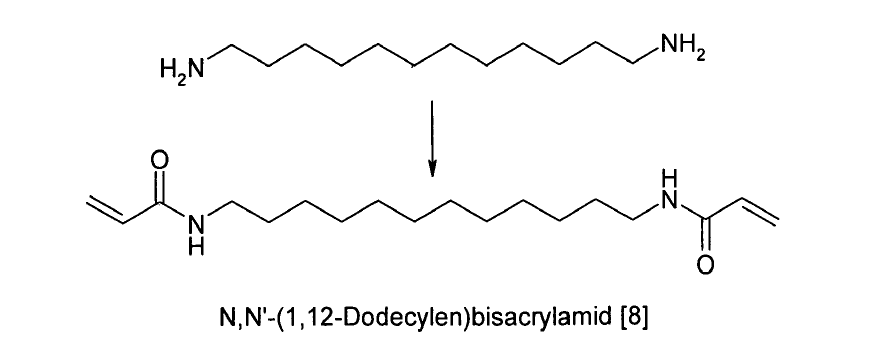

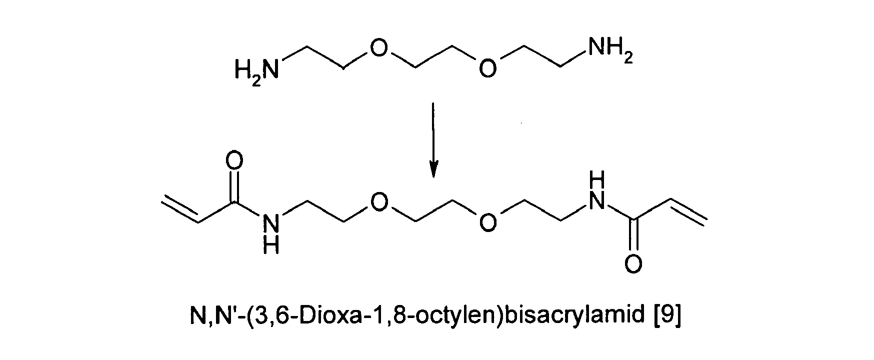

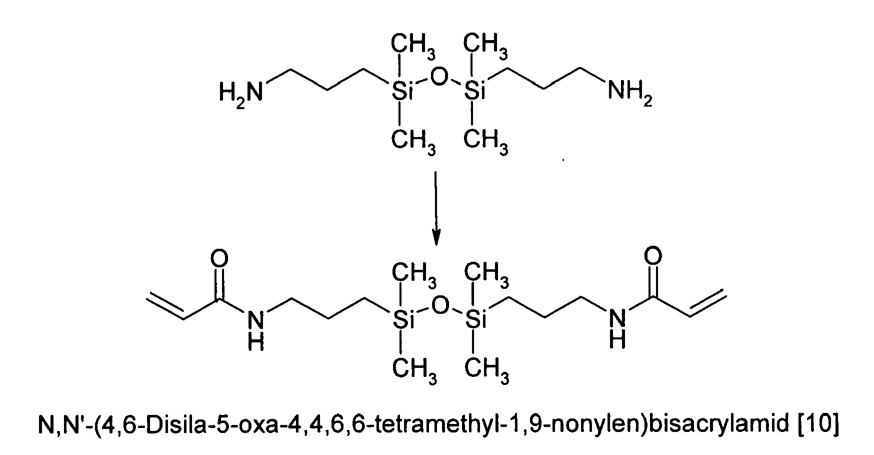

Analog zu Synthesebeispiel 5 wurden durch Acrylierung von 2,4,4-Tetramethylhexan-1,6-diamin, 1,3-Cyclohexylenbismethanamin, Dodecan-1,12-diamin, 3,6-Dioxaoctan-1,8-diamin und 4,6-Disila-5-oxa-4,4,6,6-tetramethylnonan-1,9-diamin die entsprechenden Acrylamide N,N'-(2,4,4-Tetramethyl-1,6-hexylen)bisacrylamid [6], N,N'-(1,3-Cyclohexylendimethylen)bisacrylamid [7], N,N'-(1,12-Dodecylen)bisacrylamid [8], N,N'-(3,6-Dioxa-1,8-octylen)bisacrylamid [9] und N,N'-(4,6-Disila-5-oxa-4,4,6,6-tetramethyl-1,9-nonylen)bisacrylamid [10] hergestellt und anhand ihrer NMR-Spektren charakterisiert.

### Synthesebeispiel 11

### Herstellung des Trisacrylamids eines "trifunktionellen" Amins

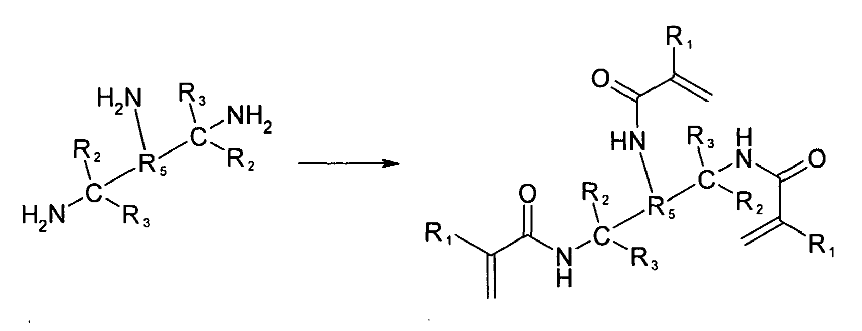

### Synthesebeispiel 11

### Herstellung von Tris(2-acrylamidoethyl)amin [11]

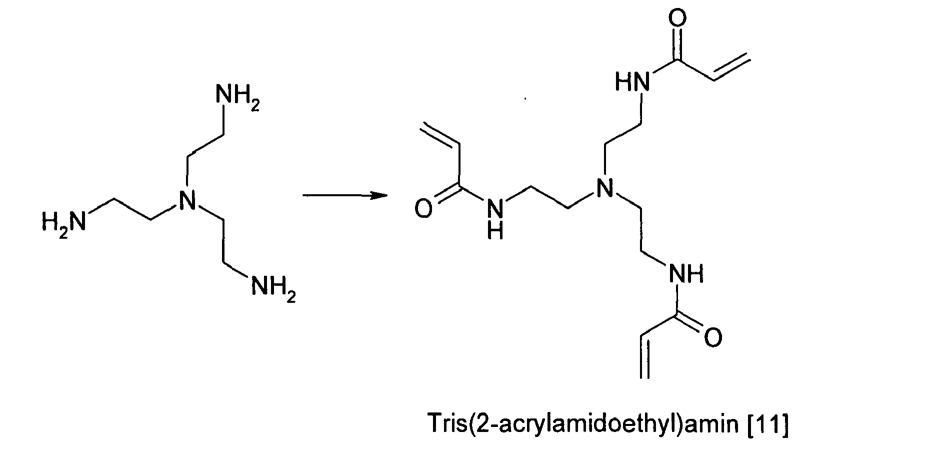

Analog zu Synthesebeispiel 5, jedoch unter Einsatz von jeweils 3,6 mol Acrylsäurechlorid und Säurefänger (NaHCO₃ oder Triethylamin) pro Mol Tris(2-aminoethyl)amin wurde Tris(2-acrylamidoethyl)amin [11] als farbloses Öl in einer Ausbeute von 87 % d. Th. erhalten und anhand der NMR-Spektren charakterisiert.

### Beispiele 1 bis 4

### Herstellung der Acrylimide "monofunktioneller" Amine

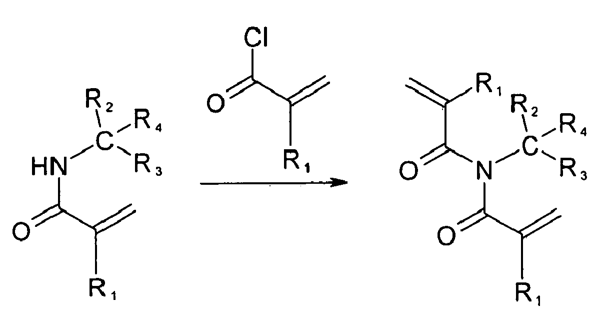

### Beispiel 1

### Herstellung von N-Propylacrylimid [12]

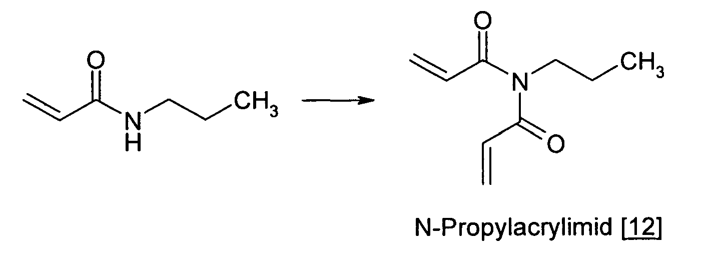

4,0 g (35,3 mmol) N-Propylacrylamid [1] und 9,8 ml (70,7 mmol, 2 Äquiv.) Triethylamin als Säurefänger wurden in 80 ml wasserfreiem Methylenchlorid unter Stickstoffatmosphäre mittels Eisbad gekühlt. 5,7 ml (70,7 mmol, 2 Äquiv.) Acrylsäurechlorid in 40 ml wasserfreiem Methylenchlorid wurden innerhalb 1 h zugetropft, und die Reaktionslösung wurde weitere 24 h lang bei Raumtemperatur gerührt. Die Reaktionslösung wurde mit 30 ml 0,5 N HCl und 30 ml verdünnter NaHCO₃-Lösun (aus 15 ml ges. NaHCO₃-Lösun und 15 ml Wasser) ausgeschüttelt. Die organische Phase wurde über Na₂SO₄ getrocknet und das Lösungsmittel im Vakuum bei Raumtemperatur entfernt. Der Rückstand wurde säulenchromatographisch mit PE:EE = 10:1 gereinigt.
Ausbeute: 2,48 g (42 % d. Th.) [12] als farblose Flüssigkeit.
DC (PE:EE = 5:1): R_{f} = 0,59
¹H-NMR (CDCl₃, δ, ppm): 6,66 (dd, 2H, CH=CH₂), 6,42 (dd, 2H, cis-CH=CH₂), 5,80 (dd, 2H, trans-CH=CH₂), 3,72 (t, 2H, N-CH₂), 1,62 (m, 2H, N-CH₂-CH₂), 0,92 (t, 3H, CH₃).
¹³C-NMR (CDCl₃, δ, ppm): 168,58 (C=O), 130,45 (CH=CH₂), 129,61 (CH=CH₂), 45,89 (N-CH₂), 22,20 (N-CH₂-CH₂), 10,99 (CH₃).

### Beispiel 2

### Herstellung von N-Hexylacrylimid [13]

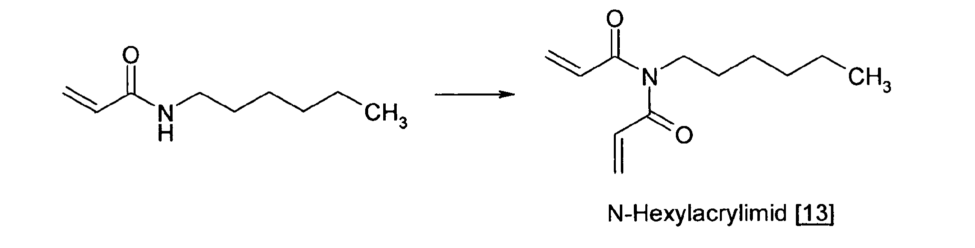

Analog zu Beispiel 1 wurde N-Hexylacrylimid [13] durch Acrylierung von N-Hexylacrylamid [2] in 40 % d. Th. als farblose Flüssigkeit erhalten.
¹H-NMR (CDCl₃, δ, ppm): 6,65 (dd, 2H, CH=CH₂), 6,40 (dd, 2H, cis-CH=CH₂), 5,80 (dd, 2H, trans-CH=CH₂), 3,71 (t, 2H, N-CH₂), 1,75-1,45 (m, 8H, N-CH₂-(CH₂)₄). 0,90 (t, 3H, CH₃).

### Beispiel 3

### Herstellung von N-2-Ethylhexylacrylimid [14]

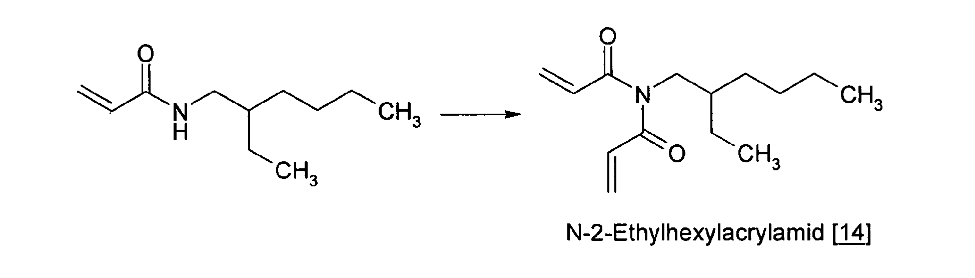

Analog zu Beispiel 1 wurde N-2-Ethylhexylacrylimid [14] durch Acrylierung von N-2-Ethylhexylacrylamid [3] in 39 % d. Th. als farblose Flüssigkeit erhalten.
¹H-NMR (CDCl₃, δ, ppm): 6,67 (dd, 2H, CH=CH₂), 6,42 (dd, 2H, cis-CH=CH₂), 5,85 (dd, 2H, trans-CH=CH₂), 3,61 (d, 2H, N-CH₂), 1,94 (m, 1H, N-CH₂-CH), 1,79-1,43 (m, 8H, CH₂-CH-(CH₂)₃), 0,93-0,85 (m, 6H, CH₃).

### Beispiel 4

### Herstellung von N-(2-Diethylaminoethyl)acrylimid [15]

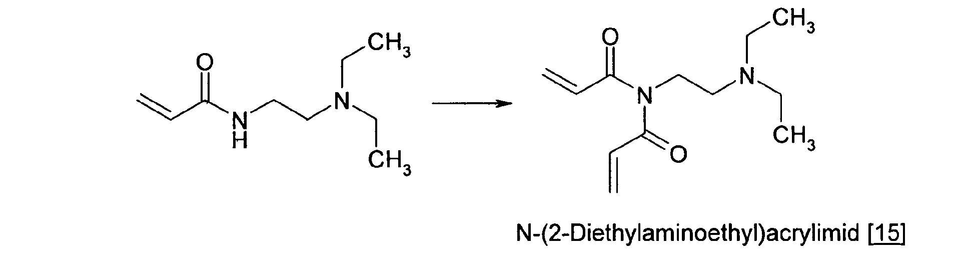

6,0 g (35,3 mmol) N-(2-Diethylaminoethyl)acrylamid [4] und 9,8 ml (70,7 mmol, 2 Äquiv.) Triethylamin wurden in 80 ml wasserfreiem Methylenchlorid unter Stickstoffatmosphäre mittels Eisbad gekühlt. 5,7 ml (70,7 mmol, 2 Äquiv.) Acrylsäurechlorid in 40 ml wasserfreiem Methylenchlorid wurden innerhalb 1 h zugetropft, und das dunkelbraune Reaktionsgemisch wurde noch weitere 24 h lang bei Raumtemperatur gerührt. Das Reaktionsgemisch wurde 2-mal mit 30 ml verdünnter NaHCO₃-Lösun (aus 15 ml ges. NaHCO₃-Lösung und 15 ml Wasser) ausgeschüttelt. Die organische Phase wurde über Na₂SO₄ getrocknet und das Lösungsmittel im Vakuum bei Raumtemperatur entfernt. Der dunkelbraune, ölige Rückstand wurde säulenchromatographisch auf Kieselgel gereinigt. Ausbeute: 2,8 g (35 % d. Th.) [15] als leicht gelbliche Flüssigkeit.
¹H-NMR (CDCl₃, δ, ppm): 6,77 (dd, 2H, CH=CH₂), 6,49 (dd, 2H, cis-CH=CH₂), 5,80 (dd, 2H, trans-CH=CH₂), 3,80 (t, 2H, (CO)₂N-CH₂), 2,69 (t, 2H, (CO)₂N-CH₂-CH₂), 2,39 (q, 4H, N-CH₂-CH₃), 1,04 (t, 6H, N-CH₂-CH₃).

### Beispiele 5 bis 10

### Herstellung der Acrylimide von Diaminen

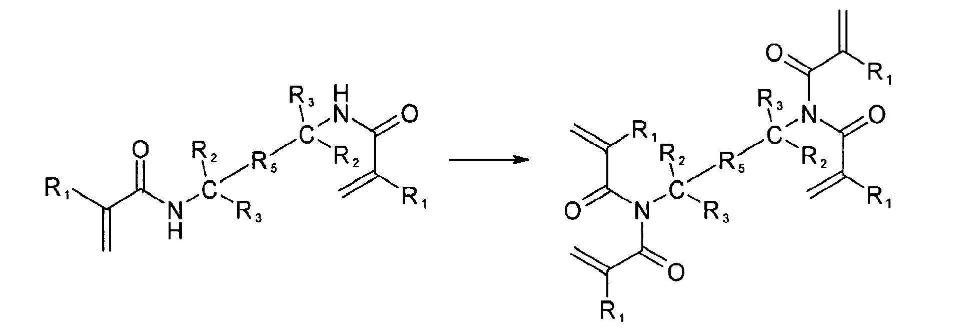

### Beispiel 5

### Herstellung von N,N'-(1,6-Hexylen)bisacrylimid [16]

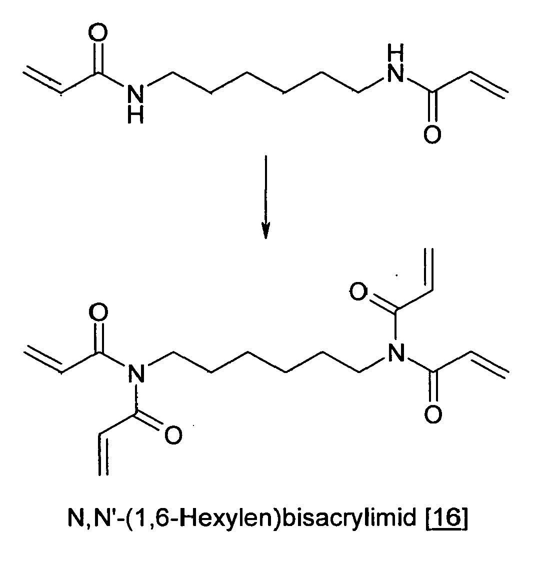

5,95 g (17,9 mmoi) N,N'-(1,6-Hexylen)bisacrylamid [5] und 10 ml (71,8 mmol, 4 Äquiv.) Triethylamin wurden in 100 ml wasserfreiem Methylenchlorid unter Stickstoffatmosphäre mittels Eisbad gekühlt. 5,8 ml (71,8 mmol, 4 Äquiv.) Acrylsäurechlorid in 50 ml wasserfreiem Methylenchlorid wurden innerhalb 1 h zugetropft, und das Reaktionsgemisch wurde weitere 48 h lang bei Raumtemperatur gerührt. Das Lösungsmittel wurde bei Raumtemperatur im Vakuum entfernt, der Rückstand in 100 ml Wasser aufgenommen und mit Ethylacetat extrahiert (3 x 40 ml). Die organische Phase wurde über Na₂SO₄ getrocknet und das Lösungsmittel bei Raumtemperatur im Vakuum entfernt. Der viskose Rückstand wurde säulenchromatographisch gereinigt (PE:EE = 2:1). Ausbeute: 2,1 g (24 % d. Th.) [16] als farbloses, viskoses Öl.
¹H-NMR (CDCl₃, δ, ppm): 6,63 (dd, 4H, CH=CH₂), 6,40 (dd, 4H, cis-CH=CH₂), 5,80 (dd, 4H, trans-CH=CH₂), 3,71 (t, 4H, N-CH₂), 1,70-1,35 (m, 8H, (CH₂)₄).

### Beispiel 6

### Herstellung von N,N'-(2,4,4-Trimethyl-1,6-hexylen)bisacrylimid [17]

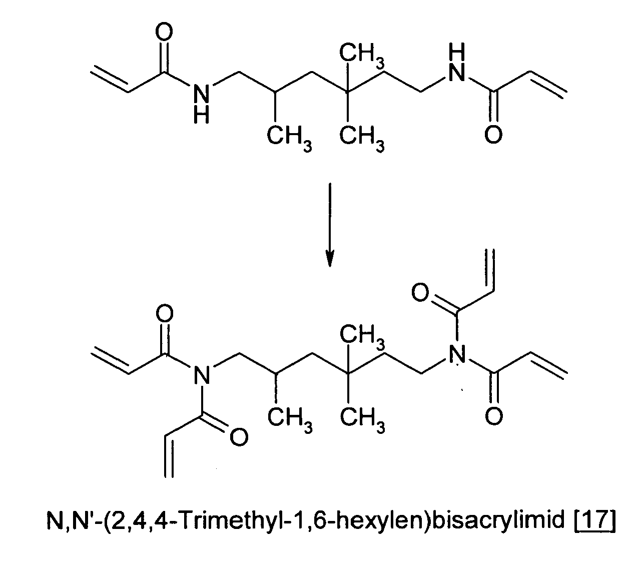

Analog zu Beispiel 5 wurde N,N'-(2,4,4-Trimethyl-1,6-hexylen)bisacrylimid [17] durch Acrylierung von N,N'-(2,4,4-Tetramethyl-1,6-hexylen)bisacrylamid [6] in einer Ausbeute von 20 % d. Th. als farblose, viskose Flüssigkeit erhalten.
¹H-NMR (CDCl₃, δ, ppm): 6,65 (m, 4H, CH=CH₂), 6,41 (m, 4H, cis-CH=CH₂), 5,80 (m, 4H, trans-CH=CH₂), 3,75-3,45 (m, 4H, N-CH₂), 2,34-2,22 (m, 1H, CH-CH₃), 1,60 (t, 2H, C-CH₂-CH₂-N), 1,44-1,17 (m, 2H, N-CH₂-CH-CH₂), 1,06 (d, 3H, CH-CH₃), 0,85 (s, 6H, C-(CH₃)₂).

### Beispiel 7

### Herstellung von N,N'-(1,3-Cyclohexylendimethylen)bisacrylimid [18]

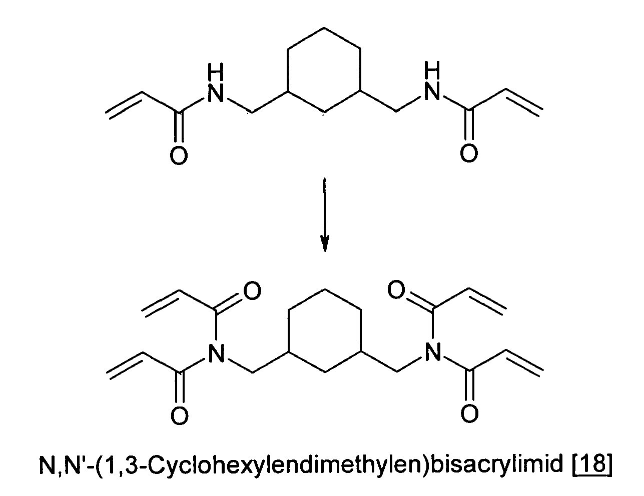

Analog zu Beispiel 5 wurde N,N'-(1,3-Cyclohexylendimethylen)bisacrylimid [18] durch Acrylierung von N,N'-(1,3-Cyclohexylendimethylen)bisacrylamid [7] mit Acrylsäurechlorid in einer Ausbeute von 17 % d. Th. als farbloses, viskoses Öl erhalten.
¹H-NMR (CDCl₃, δ, ppm): 6,64 (m, 4H, CH=CH₂), 6,40 (m, 4H, cis-CH=CH₂), 5,79 (m, 4H, trans-CH=CH₂), 3,68-3,39 (m, 4H, N-CH₂), 2,30-0,95 (m, 10H, Cyclohexyl).

### Beispiel 8

### Herstellung von N,N'-(1,12-Dodecylen)bisacrylimid [19]

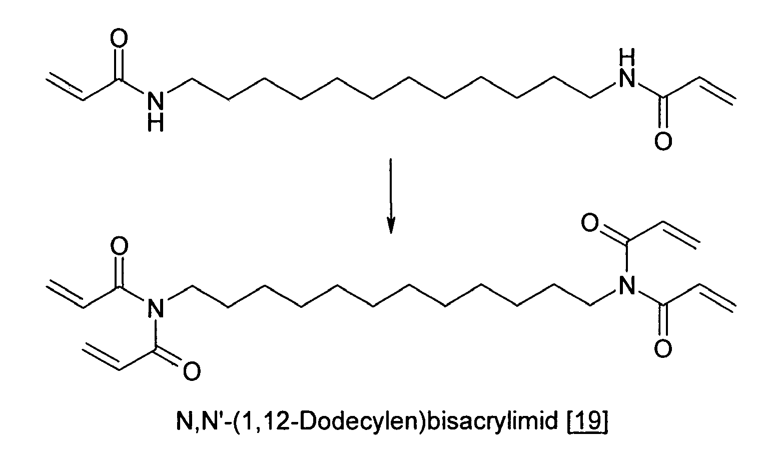

Analog zu Beispiel 5 wurde N,N'-(1,12-Dodecylen)bisacrylimid [L9] durch Acrylierung von N,N'-(1,12-Dodecylen)bisacrylamid [8] mit Acrylsäurechlorid in einer Ausbeute von 23 % d. Th. als farbloses, hochviskoses Öl erhalten.
¹H-NMR (CDCl₃, δ, ppm): 6,66 (dd, 4H, CH=CH₂), 6,42 (dd, 4H, cis-CH=CH₂), 5,80 (dd, 4H, trans-CH=CH₂), 3,70 (t, 4H, N-CH₂), 1,71-1,18 (m, 20H, (CH₂)₁₀).

### Beispiel 9

### Herstellung von N,N'-(3,6-Dioxa-1,8-octylen)bisacrylimid [20]

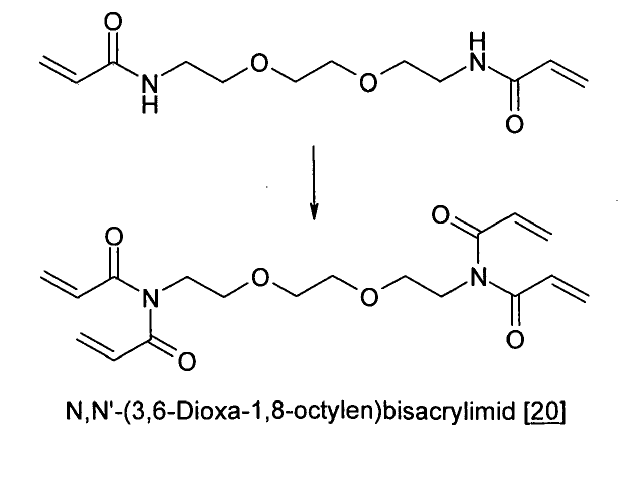

Analog zu Beispiel 5 wurde N,N'-(3,6-Dioxa-1,8-octylen)bisacrylimid [20] durch Acrylierung von N,N'-(3,6-Dioxa-1,8-octylen)bisacrylamid [9] mit Acrylsäurechlorid in einer Ausbeute von 25 % d. Th. in Form von farblosen Kristallen erhalten.
¹H-NMR (CDCl₃, δ, ppm): 6,75 (dd, 4H, CH=CH₂), 6,39 (dd, 4H, cis-CH=CH₂), 5,79 (dd, 4H, trans-CH=CH₂), 3,94 (t, 4H, N-CH₂), 3,61 (t, 4H, N-CH₂-CH₂), 3,50 (s, 4H, O-CH₂-CH₂-O).

### Beispiel 10

### Herstellung von N,N'-(4,6-Disila-5-oxa-4,4,6,6-tetramethyl-1,9-nonylen)bisacrylimid [21]

### Verfahren A:

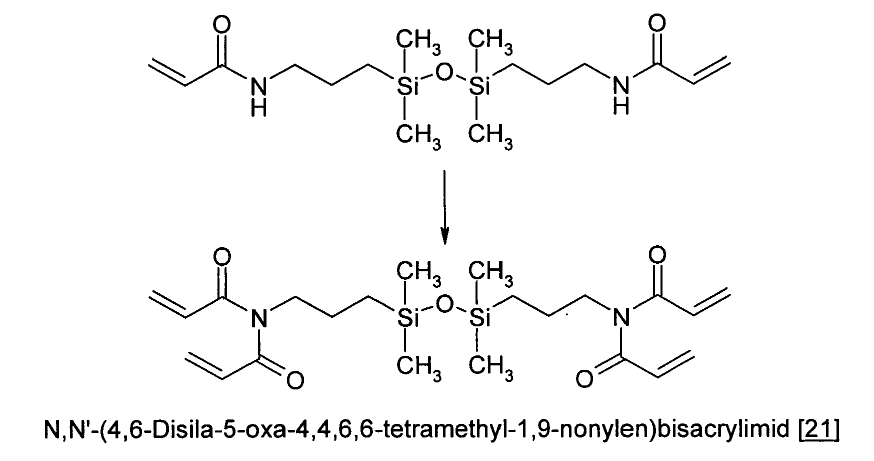

Analog zu Beispiel 5 wurde N,N'-(4,6-Disila-5-oxa-4,4,6,6-tetramethyl-1,9-nonylen)-bisacrylimid [21] durch Acrylierung von N,N'-(4,6-Disila-5-oxa-4,4,6,6-tetramethyl-1,9-nonylen)bisacrylamid [10] mit Acrylsäurechlorid in einer Ausbeute von 12 % d. Th. als farbloses Öl erhalten.

Wegen der geringen Ausbeute nach Verfahren A wurde 4,6-Disila-5-oxa-4,4,6,6-tetramethylnonan-1,9-diamin zur Synthese von [21] gemäß Verfahren B herangezogen. Dadurch entfällt allgemein die Isolierung der jeweiligen Acrylamid-Vorstufe.

### Verfahren B:

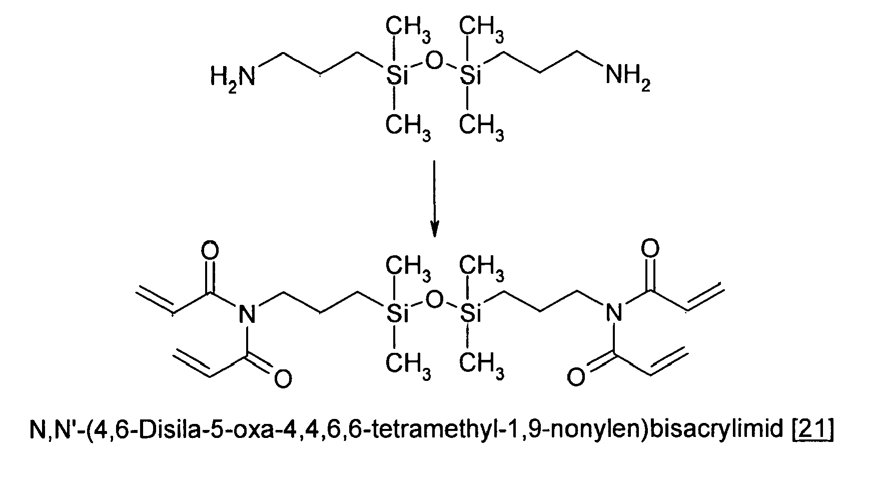

2,0 g (8,0 mmol) 4,6-Disila-5-oxa-4,4,6,6-tetramethylnonan-1,9-diamin und 6,7 ml (48,0 mmol, 6 Äquiv.) Triethylamin wurden in 40 ml wasserfreiem Methylenchlorid unter Stickstoffatmosphäre mittels Eisbad gekühlt. 3,9 ml (48,0 mmol, 6 Äquiv.) Acrylsäurechlorid in 20 ml wasserfreiem Methylenchlorid wurden innerhalb 1 h zugetropft, und das Reaktionsgemisch wurde weitere 24 h lang bei Raumtemperatur gerührt. Das Reaktionsgemisch wurde im Vakuum auf die Hälfte des Volumens eingeengt, auf 100 ml Wasser gegossen und mit Ethylacetat (3 x 40 ml) extrahiert. Die vereinigten organischen Phasen wurden über Na₂SO₄ getrocknet, und das Lösungsmittel wurde im Vakuum entfernt. Der dunkelbraune, viskose Rückstand wurde säulenchromatographisch gereinigt (PE:EE = 3:1). Ausbeute: 790 mg (21 % d. Th.) [21] als farbloses Öl.
DC (PE:EE = 3:1): R_{f} = 0,63
¹H-NMR (CDCl₃, δ, ppm): 6,55 (dd, 4H, CH=CH₂), 6,41 (dd, 4H, cis-CH=CH₂), 5,79 (dd, 4H, trans-CH=CH₂), 3,72 (t, 4H, N-CH₂), 1,58 (m, 4H, N-CH₂-CH₂), 0,49 (m, 4H, Si-CH₂), 0,03 (s, 12H, Si-CH₃).
¹³C-NMR (CDCl₃, δ, ppm): 168,79 (C=O), 130,59 (CH=CH₂), 129,90 (CH=CH₂), 47,38 (N-CH₂), 23,09 (N-CH2-CH₂), 15,40 (Si-CH₂), 0,21 (Si-CH₃).

### Beispiel 11

### Herstellung des Trisacrylimids eines "trifunktionellen" Amins

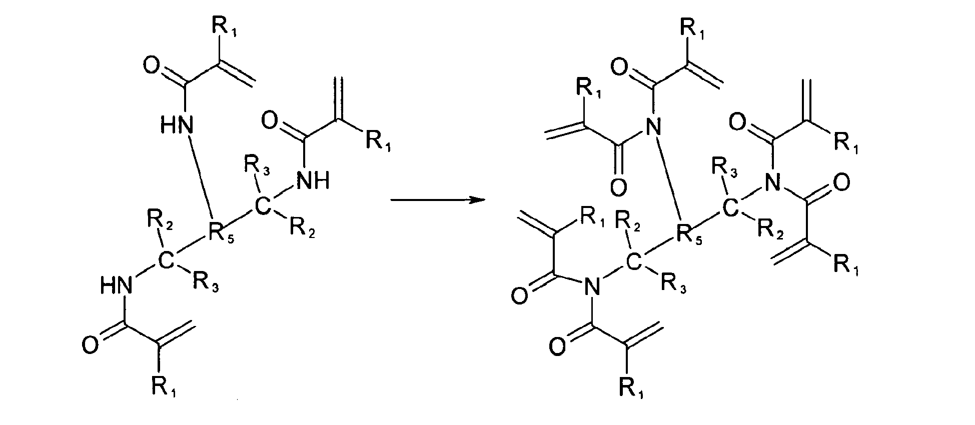

### Beispiel 11

### Herstellung von Tris(2-acrylimidoethyl)amin [22]

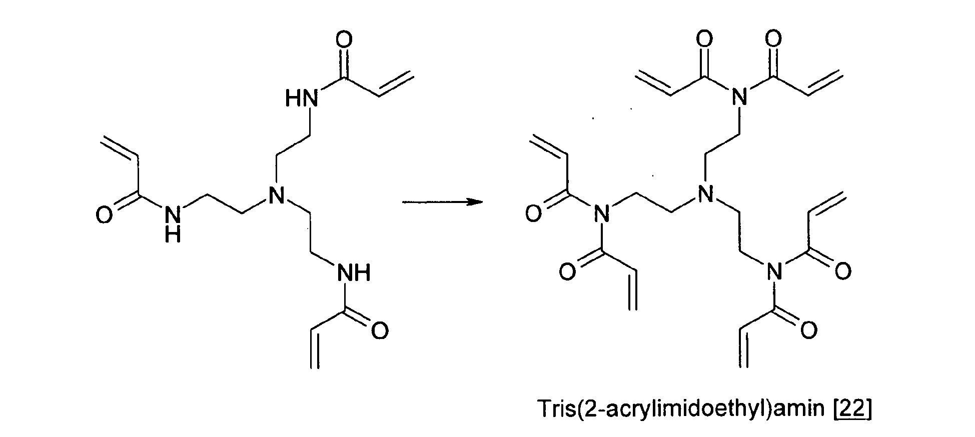

5,0 g (16,2 mmol) Tris(2-acrylamidoethyl)amin [11] und 13,5 ml (97,3 mmol, 6 Äquiv.) Triethylamin wurden in 100 ml wasserfreiem Methylenchlorid unter Stickstoffatmosphäre mittels Eisbad gekühlt. 7,9 ml (97,3 mmol, 6 Äquiv.) Acrylsäurechlorid in 50 ml wasserfreiem Methylenchlorid wurden innerhalb 1 h zugetropft, und das Reaktionsgemisch wurde weitere 48 h lang bei Raumtemperatur gerührt. Das dunkelbraune Reaktionsgemisch wurde mit 50 ml 0,5 N HCl, mit 50 ml verdünnter NaHCO₃-Lösun (aus 25 ml ges. NaHCO₃-Lösung und 25 ml Wasser) und mit 50 ml ges. NaCl-Lösung ausgeschüttelt. Die organische Phase wurde über Na₂SO₄ getrocknet und das Lösungsmittel im Vakuum bei Raumtemperatur entfernt. Der dunkelbraune, ölige Rückstand wurde säulenchromatographisch gereinigt. Ausbeute: 0,69 g (9 % d. Th.) [22] als leicht gelbliches Öl.
¹H-NMR (CDCl₃, δ, ppm): 6,92 (dd, 2H, CH=CH₂), 6,65 (dd, 2H, cis-CH=CH₂), 5,99 (dd, 2H, trans-CH=CH₂), 3,79 (t, 6H, (CO)₂-N-CH₂), 2,74 (t, 6H, N-(CH₂)₃).

### Aktivitätsmessungen

Die Acrylimide [12] bis [22] wurden auf ihre Aktivität bezüglich Initiatoreigenschaften bzw. Selbstinitüerung getestet.

### I) Test auf Initiatoreigenschaften

Die obigen elf Verbindungen wurden als Initiatoren in einer jeweiligen Menge von ca. 6 Mol-% Imidogruppen zu einem gängigen radikalisch polymerisierbaren Monomer, nämlich 1,6-Hexandioldiacrylat (HDDA)

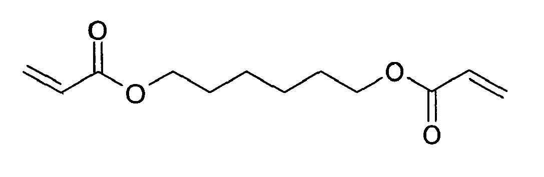

zugesetzt und gegebenenfalls unter vorsichtiger leichter Erwärmung darin gelöst. Diese Gemische wurden mittels eines Lichtleitersystems Efos Novacure in einem Wellenlängenbereich von 250-450 nm mit einer Intensität von 900 mW/cm² bestrahlt und so gehärtet. Dabei wurden die üblichen Polymerisationsparameter aufgezeichnet, und die Ergebnisse sind (als Mittelwerte von Mehrfachbestimmungen) in folgender Tabelle 1 angegeben.

Darin gibt die "Rate" die mittlere Polymerisationsgeschwindigkeit (in 10³ mol/I.s) des jeweiligen Gemischs an. "DBC" ("double bond conversion"; in %) ist der mit den Gemischen erzielbare Doppelbindungsumsatz, d.h. der aus der Polymerisationswärme ermittelte Prozentsatz an polymerisierten Doppelbindungen, bezogen auf die Gesamtheit der verfügbaren Doppelbindungen im Gemisch, und "tₘₐₓ" ist die bis zum Erreichen des Exothermenmaximums (d.h. bis zur maximalen Polymerisationsgeschwindigkeit) erforderliche Zeit (in s). Zusätzlich sind der Gehalt der jeweiligen Verbindung in HDDA in Gew.-% und in Mol-% sowie der Gehalt an Acrylimidogruppen in Mol-% angegeben.

**Tabelle 1**

| **Verbindung Nr.** | **Struktur (symbolisch)** | **Ges.-% d. Verb.** | **Mol% d. Verb.** | **Mol% Imidogruppen** | **Rate (10³ mol/l.s.)** | **DBC (%)** | **tₘₐₓ (s)** |
|---|---|---|---|---|---|---|---|
| [12] | 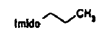 | 4,4 | 6 | 6 | 29,8 | 82,6 | 159,6 |
| [13] | 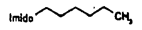 | 5,5 | 6 | 6 | 28,5 | 80,2 | 159,9 |
| [14] | 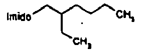 | 6,3 | 6 | 6 | 28,3 | 80,9 | 157,1 |
| [15] | 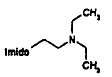 | 5,9 | 6 | 6 | 27,7 | 80,2 | 160,8 |
| [16] | 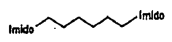 | 4,4 | 3 | 6 | 20,6 | 75,7 | 162,4 |
| [17] | 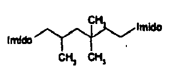 | 5,0 | 3 | 6 | 20,2 | 75,3 | 165,0 |
| [18] | 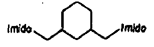 | 4,8 | 3 | 6 | 19,1 | 73,6 | 167,5 |
| [19] | 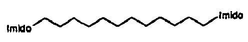 | 5,5 | 3 | 6 | 20,9 | 76,8 | 163,9 |
| [20] | 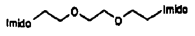 | 4,8 | 3 | 6 | 21,2 | 74,8 | 171,2 |
| [21] | 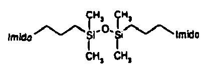 | 6,2 | 3 | 6 | 23,4 | 78,2 | 1.53,0 |
| [22] | 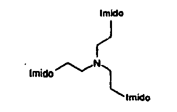 | 4,2 | 2 | 6 | 17,8 | 72,4 | 182,2 |

Sämtliche, als Tropfen aufgegebene Gemische härteten im Test zu festen, harten, nicht klebrigen Perlen aus. Bei Vergleich der einzelnen Testergebnisse untereinander zeigt sich, dass Verbindungen mit nur einer Acrylimidogruppe bei Verwendung als Initiatoren bedeutend, d.h. um rund 40 %, höhere Polymerisationsraten ermöglichen als solche mit zwei oder gar drei initiierenden Gruppen. Dies ist nach Ansicht der Erfinder auf die Immobilisierungswirkung zurückzuführen, die eintritt, sobald eine der Acrylimidogruppen im Molekül Teil einer wachsenden Polymerkette geworden ist - unabhängig davon, ob sie dieses Kettenwachstum durch Radikalbildung bei Bestrahlung gestartet hat oder in eine wachsende Kette einpolymerisiert worden ist. Wohl aus demselben Grund ist die Polymerisationsrate von Bisacrylimiden um etwa 20 % höher als jene des Trisimids [22]. Eine ähnliche Tendenz lässt sich auch bei den Doppelbindungsumsätzen und der tₘₐₓ erkennen, wenn auch in nicht so ausgeprägtem Maße.

Aus den Ergebnissen in Tabelle 1 geht somit deutlich hervor, dass unter erfindungsgemäßer Verwendung der getesteten Acrylimide als Photoinitiatoren HDDA als beispielhaftes Monomer mit hohem DBC und mit Polymerisationsraten im Bereich mancher handelsüblicher Initiatoren polymerisiert werden konnte. Zwar lösen einige handelsübliche Photoinitiatoren, wie z.B. der Standardinitiator Darocur 1173 von Ciba, deutlich raschere Polymerisationsreaktionen aus, allerdings verfügen diese zumeist nicht über polymerisierbare Gruppen und werden daher nicht in die Polymerketten eingebaut, was - besonders bei höheren Konzentrationen des Initiators - Probleme bei den fertigen Harzen verursachen kann. Die Eignung der Acrylimide für die erfindungsgemäße Verwendung als Photoinitiatoren war jedenfalls eindeutig belegt.

### II) Test unter Selbstinitiierung

Jene sieben der elf Verbindungen, die für eine Polymerisation in Substanz ausreichend niedrige Viskosität aufwiesen, d.h. die Verbindungen [12] bis [15], [17], [21] und [22], wurden ohne Beimischung eines zusätzlichen Initiators in Substanz bestrahlt und polymerisiert. Wiederum härteten alle Testtropfen zu festen, klebfreien Perlen aus. Die Ergebnisse sind in nachstehender Tabelle 2 angeführt.

**Tabelle 2**

| **Verbindung Nr.** | **Struktur (symbolisch)** | **Gew.-% d. Verb.** | **Rate (10³ mol/l.s.)** | **DBC (%)** | **tₘₐₓ (s)** |
|---|---|---|---|---|---|
| [12] | 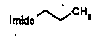 | 100 | 196,3 | 95,2 | 20,4 |
| [13] | 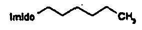 | 100 | 170,0 | 92,7 | 21,3 |
| [14] | 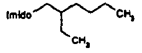 | 100 | 164,8 | 89,1 | 21,8 |
| [15] | 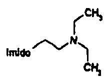 | 100 | 167,4 | 90,3 | 20,9 |
| [17] | 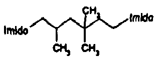 | 100 | 42,6 | 78,9 | 19,5 |
| [21] | 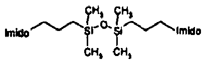 | 100 | 44,5 | 80,2 | 19,2 |
| [22] | 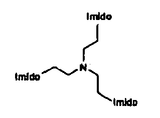 | 100 | 38,1 | 73, 5 | 16, 8 |

In diesem Test tritt die raschere Härtung der monofunktionellen Acrylimide gegenüber di- und trifunktionellen Derivaten noch deutlicher, nämlich um einen Faktor 4 bis 5 bei den Polymerisationsraten zutage, was jedoch hier zu einem Gutteil auch auf die niedrigere Viskosität der Verbindungen zurückzuführen ist. Aufgrund der hohen Reaktivität aller getesteten Verbindungen als Monomere sind die Polymerisationsraten der Verbindungen [12] bis [15] rund 6-mal so hoch wie jene derselben Verbindungen bei Verwendung als Initiatoren für HDDA, wo diese lediglich in Konzentrationen von etwa 4 bis 7 Gew.-% enthalten waren.

Die in viel geringerem Ausmaß, d.h. nur um etwa den Faktor 2, erhöhten Polymerisationsraten der di- und trifunktionellen Imide [17], [21] und [22] in Substanz gegenüber der Verwendung derselben als Initiatoren für HDDA sind wohl erneut primär der höheren Viskosität zuzuschreiben.

Dieser Test belegt jedenfalls klar, dass die getesteten Verbindungen selbstinitiierende, hochreaktive Monomere sind. Aufgrund der in Test 1) bestätigten, vergleichbaren Initiatoreigenschaften aller elf Verbindungen, darf die Selbstinitüerungsfähigkeit auch für die übrigen vier (hochviskosen oder festen) Verbindungen - mit ähnlichen Tendenzen und relativen Verhältnissen der elf Verbindungen zueinander wie im HDDA-Test - vorausgesetzt werden.

Daher stellt die Erfindung die Möglichkeit bereit, bestimmte Derivate von Acrylsäureimiden ohne Initiatorzusatz als selbstinitierende, hochreaktive Monomere alleine oder im Gemisch mit Comonomeren, für welche sie als Initiator fungieren, zu polymerisieren. Unter Anwendung der Erfindung können somit Kunstharze, wie z.B. Kunststoffbeschichtungen, aus Homo- oder Copolymeren der hierin beschriebenen Acrylimide für diverse Anwendungen in kostensparender Weise hergestellt werden.

## Patentansprüche

1. Verwendung von (Meth)acrylsäureimiden der folgenden Formel (1): 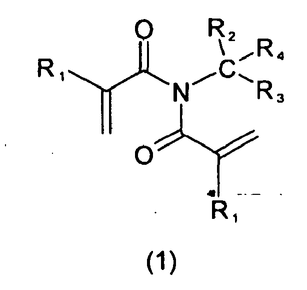 worin
die R₁ jeweils unabhängig voneinander ein Wasserstoffatom oder Methyl sind,
R₂ und R₃ jeweils unabhängig voneinander ein Wasserstoffatom oder ein gegebenenfalls substituierter unverzweigter oder verzweigter Alkylrest mit 1 bis 4 Kohlenstoffatomen sind und
R₄ ein unverzweigter, verzweigter oder zyklischer, gesättigter oder ungesättigter Kohlenwasserstoffrest mit 1 bis 10 Kohlenstoffatomen ist, der gegebenenfalls substituiert und/oder durch Heteroatome unterbrochen ist, wobei R₄ gegebenenfalls mit einem gleichen oder unterschiedlichen Rest R₄ eines zweiten (Meth)acrylsäureimids der Formel (1) zu einem zweiwertigen Rest R₅ verbunden ist, um ein Dimer der Formel (2) zu bilden: 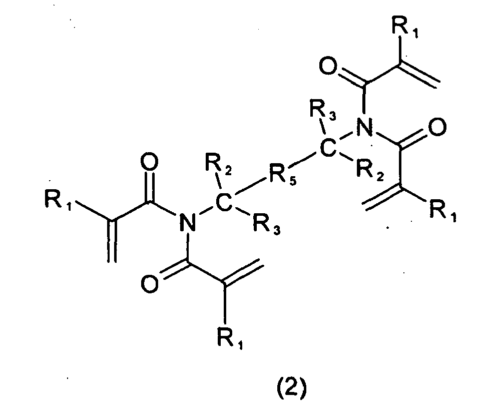 als Initiatoren bzw. selbstinitüerende Monomere für die Photopolymerisation.

2. Verwendung nach Anspruch 1, **dadurch gekennzeichnet, dass** alle R₁ Wasserstoffatome sind.

3. Verwendung nach Anspruch 1 oder 2, **dadurch gekennzeichnet, dass** die optionalen Substituenten für R₂, R₃ und R₄ aus Hydroxy und Amino ausgewählt sind, die gegebenenfalls mit C₁₋₄-Alkyl oder (Meth)acryl, vorzugsweise (Meth)acryl, substituiert sind.

4. Verwendung nach einem der Ansprüche 1 bis 3, **dadurch gekennzeichnet, dass** R₂ und R₃ jeweils ein Wasserstoffatom sind.

5. Verwendung nach einem der Ansprüche 1 bis 4, **dadurch gekennzeichnet, dass** R₄ ein unverzweigter oder verzweigter Alkylrest mit 1 bis 5 Kohlenstoffatomen ist.

6. Verwendung nach einem der Ansprüche 1 bis 4, **dadurch gekennzeichnet, dass** R₄ aus -(CH₂)ₘ-O-(CH₂)ₙ-CH₃, -(CH₂)ₘ-NR₆-(CH₂)ₙ-CH₃ und -(CH₂)ₘ-Si(CH₃)₂-(CH₂)ₙ-CH₃ ausgewählt ist, worin n und m ganze Zahlen von 0 bis 4, vorzugsweise 1 bis 2, sind und R₆ ein Wasserstoffatom, C₁₋₄-Alkyl oder (Meth)acryl ist.

7. Verwendung nach Anspruch 5 oder 6, **dadurch gekennzeichnet, dass** zwei Reste R₄ zu einem aus folgenden Resten ausgewählten zweiwertigen Rest R₅ verbunden sind: -(CH₂)ₚ-, -(CH₂)ₘ-O-(CH₂)_{q}-O-(CH₂)ₘ-, -(CH₂)ₘ-NR₆-(CH₂)_{q}-NR₆-(CH₂)ₘ-, -(CH₂)ₘ-Si(CH₃)₂-(CH₂)_{q}-Si(CH₃)₂-(CH₂)ₘ-, worin p und q ganze Zahlen von 2 bis 10 sind und m und R₆ wie zuvor definiert sind.

8. Verwendung nach Anspruch 7, **dadurch gekennzeichnet, dass** p = 2 bis 4 ist.

9. Verwendung nach Anspruch 7, **dadurch gekennzeichnet, dass** q = 2 bis 4 ist.

10. Verwendung nach einem der Ansprüche 6 bis 9, **dadurch gekennzeichnet, dass** R₆ jeweils (Meth)acryl ist.

11. Verwendung nach einem der vorangegangenen Ansprüche, **dadurch gekennzeichnet, dass** ein Polymer oder Präpolymer mit einem oder mehreren, über einen der Reste R₂ bis R₆ gebundenen (Meth)acrylsäureimiden der Formel (1) oder (2) modifiziert wird, um ein polymerisierbares bzw. vernetzbares Polymer oder Präpolymer mit Initiatoreigenschaften zu erhalten, wonach Photopolymerisation durchgeführt wird.

12. Verwendung nach einem der vorangegangenen Ansprüche, **dadurch gekennzeichnet, dass** ein oder mehrere (Meth)acrylsäureimide der Formel (1) oder (2) als selbstinitüerende Monomere oder ein oder mehrere damit modifizierte Polymere oder Präpolymere ohne Zusatz eines weiteren Polymerisationsinitiators unter Einwirkung von Strahlung photopolymerisiert wird/werden.

13. Verwendung nach einem der vorangegangenen Ansprüche, **dadurch gekennzeichnet, dass** ein oder mehrere (Meth)acrylsäureimide der Formel (1) oder (2) oder ein oder mehrere damit modifizierte Polymere oder Präpolymere, als Initiator(en) zu einem oder mehreren Monomer(en), Polymer(en) oder Präpolymer(en) ohne Initiatorwirkung zugesetzt wird/werden und anschließend unter Einwirkung von Strahlung Photopolymerisation durchgeführt wird.

14. Verwendung nach Anspruch 13, **dadurch gekennzeichnet, dass** das oder die (Meth)acrylsäureimid(e) der Formel (1) oder (2) oder das oder die damit modifizierten Polymer(e) oder Präpolymer(e) dem oder den Monomer(en), Polymer(en) oder Präpolymer(en) ohne Initiatorwirkung in einer solchen Menge zugesetzt wird/werden, dass die Menge der Verbindung(en) mit Initiatorwirkung 0,5 bis 20 Gew.-%, vorzugsweise 1 bis 10 Gew.-%, noch bevorzugter 1 bis 5 Gew.-%, bezogen auf die Gesamtmenge an polymerisierbaren Verbindungen, beträgt.

## Claims

1. A use, as initiators or self-initiating monomers for photopolymerisation, of (meth)acrylic imides according to the following formula (1): 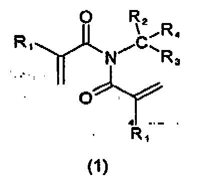 wherein
each R₁ independently represents a hydrogen atom or methyl,
R₂ and R₃ each independently are a hydrogen atom or an optionally substituted, linear or branched alkyl radical having 1 to 4 carbon atoms, and
R₄ is a linear, branched or cyclic, saturated or unsaturated hydrocarbon radical having 1 to 10 carbon atoms, optionally comprising substituted and/or intervening heteroatoms, wherein R₄ may be connected with another, identical or different, radical R₄ of a second (meth)acrylic imide according to formula (1) to form a bivalent radical R₅, thereby forming a dimer according to the following formula (2):

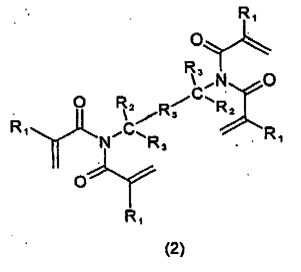

2. The use according to claim 1, **characterised in that** all R₁ are hydrogen atoms.

3. The use according to claim 1 or claim 2, **characterised in that** the optional substituents of R₂, R₃ and R₄ are selected from hydroxy and amino, which may be substituted with C₁₋₄ alkyl or (meth)acryl, preferably (meth)acryl.

4. The use according to any one of claims 1 to 3, **characterised in that** both of R₂ and R₃ are hydrogen atoms.

5. The use according to any one of claims 1 to 4, **characterised in that** R₄ is a linear or branched alkyl radical having 1 to 5 carbon atoms.

6. The use according to any one of claims 1 to 4, **characterised in that** R₄ is selected from -(CH₂)ₘ-O-(CH₂)ₙ-CH₃, -(CH₂)ₘ-NR₆-(CH₂)ₙ-CH₃ and -(CH₂)ₘ-Si(CH₃)₂-(CH₂)ₙ-CH₃, wherein n and m independently are integers from 0 to 4, preferably from 1 to 2, and R₆ is a hydrogen atom, C₁₋₄ alkyl or (meth)acryl.

7. The use according to claim 5 or claim 6, **characterised in that** two radicals R₄ are connected to form a bivalent group R₅ which is selected from: -(CH₂)ₚ-, -(CH₂)ₘ-O-(CH₂)_{q}-O-(CH₂)ₘ-, -(CH₂)ₘ-NR₆-(CH₂)_{q}-NR₆-(CH₂)ₘ- -(CH₂)ₘ-Si(CH₃)₂-(CH₂)_{q}-Si(CH₃)₂-(CH₂)ₘ-, wherein p and q independently are integers from 2 to 10 and m and R₆ are as defined before.

8. The use according to claim 7, **characterised in that** p is 2 to 4.

9. The use according to claim 7, **characterised in that** q is 2 to 4.

10. The use according to any one of claims 6 to 9, **characterised in that** all R₆ are (meth)acryl.

11. The use according to any one of the preceding claims, **characterised in that** a polymer or prepolymer is modified by one or more (meth)acrylic imide(s) according to formula (1) or (2), which is/are bound via one of the radicals R₂ to R₆, to give a polymerisable or cross-linkable polymer or prepolymer having initiator properties, whereafter photopolymerisation is carried out.

12. The use according to any one of the preceding claims, **characterised in that**, without the addition of another polymerisation initiator, one or more (meth)acrylic imide(s) according to formula (1) or (2), being (a) self-initiating monomer(s), or one or more polymer(s) or prepolymer(s) modified therewith, is/are photopolymerised by exposure to radiation.

13. The use according to any one of the preceding claims, **characterised in that** one or more (meth)acrylic imide(s) according to formula (1) or (2), or one or more polymer(s) or prepolymer(s) modified therewith, is/are added as (an) initiator(s) to one or more monomer(s), polymer(s) or prepolymer(s) without initiating properties, whereafter photopolymerisation is carried out by exposure to radiation.

14. The use according to claim 13, **characterised in that** the (meth)acrylic imide(s) according to formula (1) or (2) or the polymer(s), or the polymer(s) or prepolymer(s) modified therewith, is/are added to said monomer(s), polymer(s) or prepolymer(s) without initiating properties in an amount such that the amount of the compound(s) having initiating properties is 0.5 to 20 % by weight, preferably 1 to 10 % by weight, more preferably 1 to 5 % by weight, of the total amount of polymerisable compounds.

## Revendications

1. Utilisation d'imides de l'acide (méth)acrylique selon la formule (1): 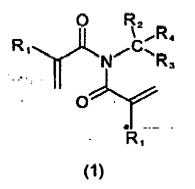 dans laquelle
les groupes R₁ sont, indépendamment l'un de l'autre, un atome d'hydrogène ou un méthyle,
les groupes R₂ et R₃ sont, indépendamment l'un de l'autre, un atome d'hydrogène ou un groupe alkyle linéaire ou ramifié, éventuellement substitué, de 1 à 4 atomes de carbone, et
R₄ est un groupe hydrocarbure linéaire, ramifié ou cyclique, saturé ou insaturé, de 1 à 10 atomes de carbone, éventuellement comprenant des hétéroatomes substituants et/ou intervenants, ledit R₄ étant, selon le cas, lié avec un groupe R₄ identique ou différent d'un deuxième imide de l'acide (méth)acrylique selon la formule (1) pour former un groupe divalent R₅ pour obtenir ainsi un dimère selon la formule (2): 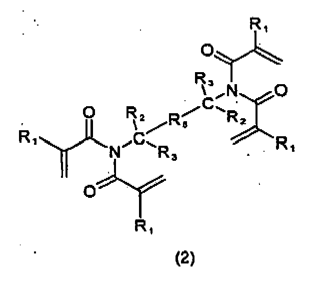 comme initiateurs ou monomères auto-initiants pour la photopolymérisation.

2. Utilisation selon la revendication 1, **caractérisée en ce que** les R₁ sont tous des atomes d'hydrogène.

3. Utilisation selon la revendication 1 ou 2, **caractérisée en ce que** les substituents éventuels des groupes R₂, R₃ et R₅ sont choisis parmi les groupes hydroxy et amino, qui sont, selon le cas, substitués par un alkyle C₁₋₄ ou le (méth)acryle, de préférence par le (méth)acryle.

4. Utilisation selon l'une des revendications 1 à 3, **caractérisée en ce que** les R₂ et les R₃ respectivement sont des atomes d'hydrogène.

5. Utilisation selon l'une des revendications 1 à 4, **caractérisée en ce que** R₄ est un groupe alkyle, linéaire ou ramifié, de 1 à 5 atomes de carbone.

6. Utilisation selon l'une des revendications 1 à 4, **caractérisée en ce que** R₄ est choisi parmi -(CH₂)ₘ-O-(CH₂)ₙ-CH₃, -(CH₂)ₘ-NR₆-(CH₂)ₙ-CH₃ et -(CH₂)ₘ-Si(CH₃)₂-(CH₂)ₙ-CH₃, où n et m sont des nombres entiers de 0 à 4, de préférence de 1 à 2, et R₆ représente un atome d'hydrogène, un alkyle C₁₋₄ ou le (méth)acryle.

7. Utilisation selon la revendication 5 ou 6, **caractérisée en ce que** deux groupes R₄ sont connectés pour former un groupe bivalent R₅, qui est choisi parmi -(CH₂)ₚ-, -(CH₂)ₘ-O-(CH₂)_{q}-O-(CH₂)ₘ-, -(CH₂)ₘ-NR₆-(CH₂)_{q}-NR₆-(CH₂)ₘ-, -(CH₂)ₘ-Si(CH₃)₂ et -(CH₂)_{q}-Si(CH₃)₂-(CH₂)ₘ-, où p et q sont des nombres entiers de 2 à 10 et m et R₅ sont définis comme avant.

8. Utilisation selon la revendication 7, **caractérisée en ce que** p est 2 à 4.

9. Utilisation selon la revendication 7, **caractérisée en ce que** q est 2 à 4.

10. Utilisation selon l'une des revendications 6 à 9, **caractérisée en ce que** les R₆ respectivement représentent le (méth)acryle.

11. Utilisation selon l'une des revendications précédentes, **caractérisée en ce qu'**un polymère ou un prépolymère est modifié avec un ou plusieurs imide(s) de l'acide (méth)acrylique selon la formule (1) ou (2), lié(s) via un des groupes R₂ à R₆, pour obtenir un polymère ou prépolymère avec propriétés d'initateur, qui peut être polymérisé ou réticulé, après quoi une photopolymérisation est réalisée.

12. Utilisation selon l'une des revendications précédentes, **caractérisée en ce que**, sans ajouter un autre initiateur de polymérisation, un ou plusieurs imide(s) de l'acide (méth)acrylique selon la formule (1) ou (2), étant (un) monomère(s) autoinitiant(s), ou un ou plusieurs polymère(s) ou prépolymère(s), modifié(s) avec le(s)dit(s) imide(s) de l'acide (méth)acrylique, est/sont photopolymérisé(s) par l'action de radiation.

13. Utilisation selon l'une des revendications précédentes, **caractérisée en ce qu'**un ou plusieurs imide(s) de l'acide (méth)acrylique selon la formule (1) ou (2) ou un ou plusieurs polymère(s) ou prépolymère(s), modifié(s) avec le(s)dit(s) imide(s) de l'acide (méth)acrylique, est/sont ajouté(s) à un ou plusieurs monomère(s), polymère(s) ou prépolymère(s) sans propriétés d'initateur, après quoi une photopolymérisation est réalisée par l'action de radiation.

14. Utilisation selon la revendication 13, **caractérisée en ce que** le(s)dit(s) imide(s) de l'acide (méth)acrylique selon la formule (1) ou (2) ou le(s)dit(s) polymère(s) ou prépolymère(s), modifié(s) avec le(s)dit(s) imide(s) de l'acide (méth)acrylique, est/sont ajouté(s) à le(s)dit(s) monomère(s), polymère(s) ou prépolymère(s) sans propriétés d'initateur dans une telle quantité que la quantité du/des composé(s) avec propriétés d'initateur représente 0,5 à 20 % en poids, de préférence 1 à 10 % en poids, de manière plus préférée 1 à 5 % en poids, de la quantité totale des composés polymérisables.
